**Europäisches Patentamt**

**European Patent Office**

**Office européen des brevets**

(19)

(11) Veröffentlichungsnummer : **0 453 733 B1**

## (12) EUROPÄISCHE PATENTSCHRIFT

(45) Veröffentlichungstag der Patentschrift :
**04.05.94 Patentblatt 94/18**

(51) Int. Cl.$^5$ : **B23K 26/04, G01B 11/27**

(21) Anmeldenummer : **91102915.5**

(22) Anmeldetag : **28.02.91**

(54) **Mess-Verfahren und -Vorrichtung zur dreidimensionalen Lageregelung des Brennpunktes eines Hochenergie-Laserstrahls.**

(30) Priorität : **24.04.90 DE 4012927**

(43) Veröffentlichungstag der Anmeldung :
**30.10.91 Patentblatt 91/44**

(45) Bekanntmachung des Hinweises auf die Patenterteilung :
**04.05.94 Patentblatt 94/18**

(84) Benannte Vertragsstaaten :
**DE FR GB IT**

(56) Entgegenhaltungen :
**EP-A- 0 075 192**
**EP-A- 0 154 865**
**GB-A- 2 158 228**
**GB-A- 2 184 831**

(73) Patentinhaber : **Deutsche Aerospace AG**
**D-81663 München (DE)**

(72) Erfinder : **Gorriz, Michael**
**Bismarckstrasse 11a**
**W-8000 München 40 (DE)**
Erfinder : **Giesen, Adolf, Dr.**
**Rankbachstrasse 45**
**W-7253 Renningen (DE)**
Erfinder : **Borik, Stefan**
**Edelweissstrasse 13**
**W-7022 Leinfelden (DE)**

EP 0 453 733 B1

## Beschreibung

Die Erfindung betrifft ein Verfahren zur dreidimensionalen Lageregelung des Brennpunktes eines Hochenergie-Laserstrahls unter Messung von Verkippung und Brennweitenabweichung des Laserstrahls und eine Vorrichtung zu dessen Durchführung.

Bei der Materialbearbeitung mittels Laserstrahlen ist es erforderlich, den Strahl möglichst genau zu positionieren und zu fokussieren. Es sind zahlreiche Vorschläge bekannt, die dieses Ziel erreichen sollen. So ist z.B. aus der DE 32 02 432 C2 ein System bekannt, das mit einem zweiten Laser arbeitet und unter Beobachtung des Zieles die Lage in der Ebene senkrecht zum Strahl, aber nicht die Brennpunkttiefe korrigiert. Das gleiche gilt für die Vorrichtung nach der DE 34 06 617 Al. Aus der DE 38 00 427 Al ist es ferner bekannt, den Abstand des Lasers vom Werkstück zu regeln. Dabei wird der Fokus mit einem aus zwei getrennten Hälften bestehenden Detektorelement ermittelt. Aus der GB-A-2 184 831 ist es bekannt, den Brennpunkt mittels eines Strahlteilers, der aus einem Spiegel mit Bohrungen besteht, und eines Quadrantdetektors, senkrecht zur optischen Achse zu halten.

Es ist das Ziel der Erfindung, ein Verfahren und eine Vorrichtung zu schaffen, die es ermöglichen, die Abweichung des Strahles nicht nur senkrecht zur Strahlachse, sondern auch die Abweichung des Brennpunktes längs der Strahlachse unabhängig von den Oberflächeneigenschaften des zu bearbeitenden Materials während der Bearbeitung zu ermitteln und dadurch eine Lageregelung während der Bearbeitung zu ermöglichen.

Diese Aufgabe wird durch die im Anspruch 1 bzw. 3 angegebenen Merkmale gelöst.

Einzelheiten der Erfindung ergeben sich aus den Unteransprüchen und der Beschreibung, in der anhand der Zeichnung ein Ausführungsbeispiel erläutert wird. Es zeigen

Fig. 1         eine schematische Darstellung des optischen Teils der erfindungsgemäßen Vorrichtung,

Fig. 2         schematisch die Lage der Brennpunkte des erzeugten astigmatischen Meß-Strahls,

Fig. 3         die Anordnung der erzeugten Brennflecke auf dem Detektor,

Fig. 4a-c     eine Aufsicht auf und Schnitte durch den verwendeten Strahlteiler,

Fig. 5         ein Blockschaltbild des Auswerteteils der erfindungsgemäßen Vorrichtung.

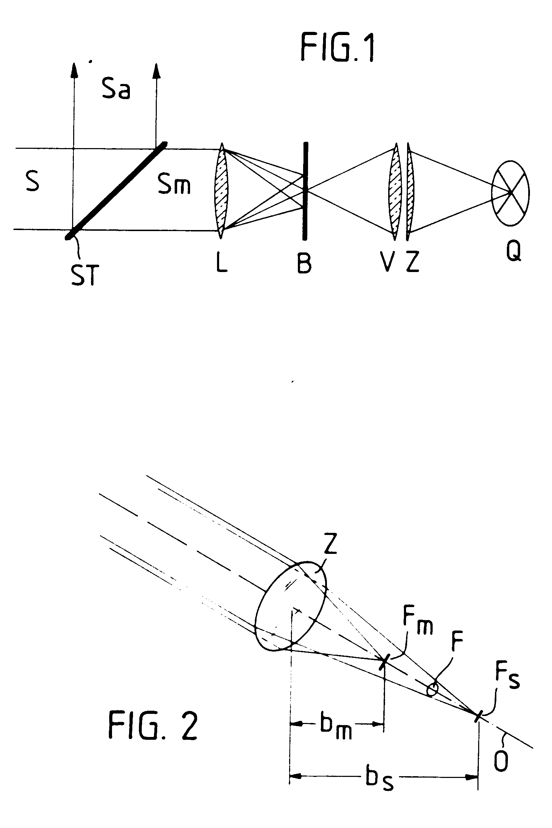

Fig. 1 zeigt eine schematische Darstellung des optischen Teils der erfindungsgemäßen Vorrichtung. Dieser setzt sich zusammen aus einem Strahlteiler ST, einer Fokussieranordnung L mit einer Blende B sowie einem Linsenpaar bzw. -system V/Z und einem Quadrantendetektor Q.

Der Strahl S trifft zunächst auf den Strahlteiler ST und wird von diesem in einen Arbeitsstrahl $S_a$ und einen Meßstrahl $S_m$ aufgeteilt. Der Strahlteiler besteht aus einem Spiegel, der mit Bohrungen versehen ist. Diese Bohrungen sind quadratisch angeordnet und so groß, daß der Flächenanteil der Bohrungsflächen an der Gesamtfläche genau dem gewünschten Transmissionsfaktor T entspricht. Ist a der Durchmesser und b der Abstand der Bohrungen, so ist nach Harvey, J.E., Scott,M.L. (1980), SPIE 240, 232:

$$T = \pi/4 * a^2 / b^2$$

In Transmission werden die Strahlen fokussiert und man erhält ein durch die Gitterstruktur der Bohrungen bestimmtes Beugungsmuster. In Reflexion geht der Hauptteil in die nullte Ordnung; auf die nächsten Ordnungen entfallen insgesamt nur wenige Prozent:

$$P_{R\nu\mu} = R(1-T)^2 \; somb^2(a/b * \sqrt{(m^2+n^2)}) * P_0$$

$$P_{Ro\mu} = R(1/T)^2 * P_0$$

wobei $P_R$ die Leistung in den verschiedenen Ordnungen, $P_O$ die eingestrahlte Gesamtleistung und R der Reflexionskoeffizient ist. Dabei ist allgemein

$$somb(x) = 2 \; J_1(\pi x)/\pi x \qquad und$$

$$J1 \qquad = die \; Besselfunktion \; 1. \; Ordnung.$$

In Transmission gibt es ebenfalls viele Ordnungen, wobei auf die nullte die meiste Intensität fällt, auf die benachbarten aber vergleichbar viel.

$$P_{Tv\backslash \mu} = T^2 \, somb^2(alb \, * \, \sqrt{(m^2 + n^2)}) \, * \, P_0$$

und somit für die nullte Ordnung

$$P_{To\backslash o} = T^2 \, * \, P_0\hat{e}$$

Jede Ordnung für sich ist ein genaues Abbild des Fernfeldes des Originalstrahles. Deshalb ergibt sich hier die Möglichkeit, Strahldiagnose zu betreiben. Nachteil dieses Verfahrens ist, daß ein Teil der Strahlleistung in die höheren Beugungsordnungen geht.

Der Abstand der Bohrungen bestimmt den Abstand der Beugungsordnungen, der Radius hingegen die ausgekoppelte Intensität. Diese Parameter müssen den Anforderungen angepaßt werden. Bei der im Ausführungsbeispiel beschriebenen Anordnung wird ein Lochabstand von 3 mm und ein Bohrungsdurchmesser von 0.5 mm verwendet. Dies ergibt einen Transmissionskoeffizienten von $T = 2.2 * 10^{-2}$.

Mit einer sphärischen Linse L hinter dem Strahlteiler ST wird der Strahl fokussiert. Im Fokus werden die höheren Ordnungen mit einer quadratischen Lochblende B ausgeblendet. Mit der nachfolgenden Linsenkombination V/Z wird das Bild vergrößert und eine astigmatische Aberration eingeführt, wie z.B. auch bei

Bricot, C., Lehureau, J.C., Puech, C., Le Carvennec, F. (1976), IEEE Trans. Consumer Electron. CE-22, 304

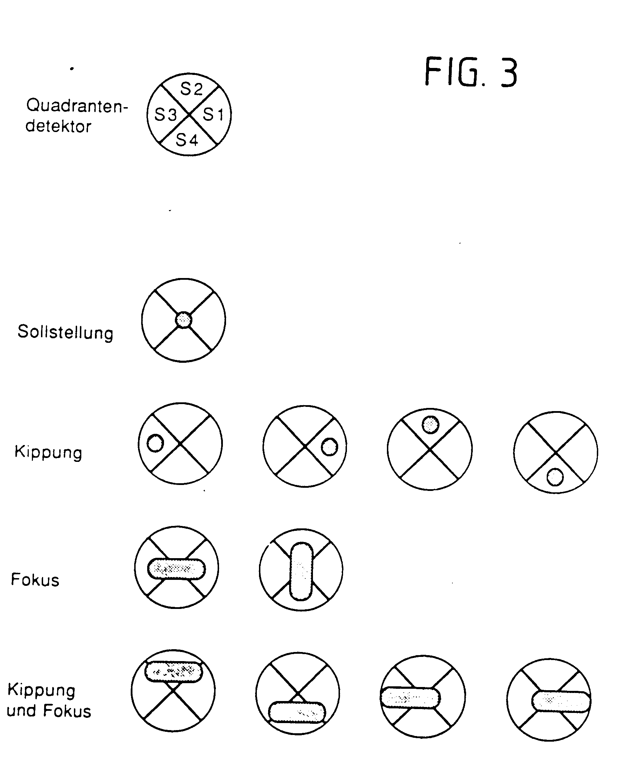

beschrieben ist. Dadurch entstehen, wie in Figur 2 dargestellt, in x- und y- Richtung zwei verschiedene Brennpunkte, und zwar der meridionale Brennpunkt $F_m$ und der sagittale Brennpunkt $F_s$. Zwischendrin liegt der Punkt der größten Schärfe F. Dort wird ein Quadrantendetektor Q mit vier Sektoren $S_1$ ... $S_4$ angeordnet. Je nach Verkippung des Strahls und Lage des Brennpunktes erhält man verschiedene Bilder auf dem Detektor, deren Charakteristik der Figur 3 zu entnehmen ist. Die Signale am Ausgang des Quadrantendetektors werden mit $Q_1$ ... $Q_4$ bezeichnet. Die Korrekturgrößen für den Regelmechanismus sind $K_{Tx}$, $K_{Ty}$ und $K_F$ und dienen zum Verstellen der x- und y-Kippung bzw. des Fokus. Sie werden folgendermaßen berechnet:

$$K_{Tx} = Q_1 - Q_3$$
$$K_{Ty} = Q_2 - Q_4$$
$$K_F = (Q_1 + Q_3) - (Q_2 + Q_4)$$

Wie in Figur 3 zu sehen ist, muß zunächst die Verkippung mit dem entsprechenden Stellglied ausgeglichen werden, bevor der Brennpunkt korrigiert werden kann, da die Brennpunktskorrektur von einem nicht verkippten Strahl ausgeht.

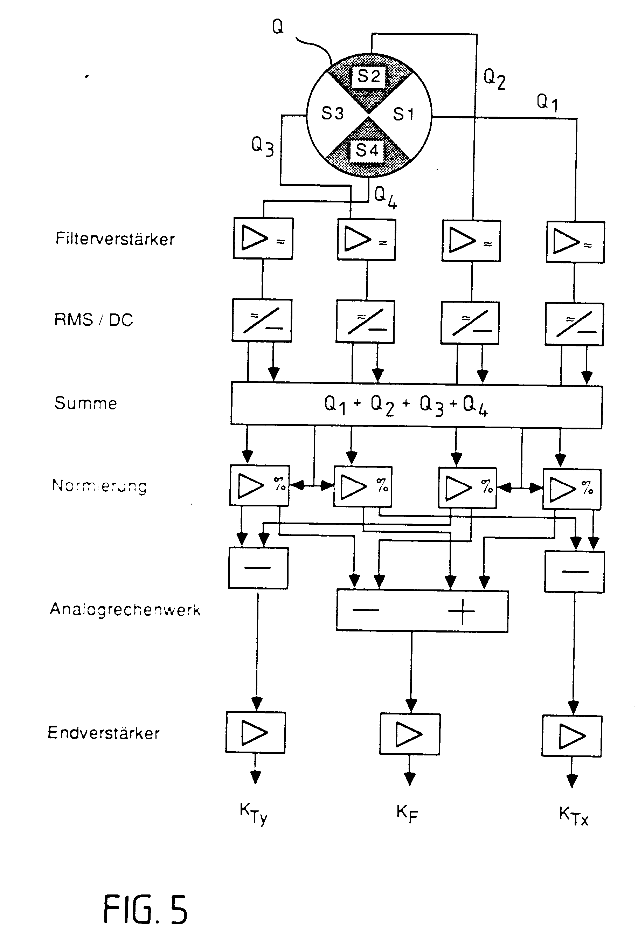

Figur 5 zeigt ein Blockschaltbild der zur Auswertung verwendeten Elektronik. Die aus dem Quadrantendetektor Q mit den Sektoren $S_1$ ... $S_4$ kommenden Signale $Q_1$ ... $Q_4$ werden einzeln z.B. mit Operationsverstärkern verstärkt. Danach folgt ein Bandfilter, der auf die Frequenz des Meßzerhackers abgestimmt ist. Dieser ist zweckmäßig in der Nähe der Blende B in den Strahlengang eingebracht. Diese Kombination aus Meßzerhacker und Filterverstärker dient zur Vergrößerung des Signal-Rauschverhältnisses und ist zudem bei dem im Ausführungsbeispiel verwendeten pyroelektrischen Detektor aus physikalischen Gründen erforderlich. Anschließend werden die Signale mit spannungsgesteuerten Gleichrichtern (RMS/DC-Konvertern) in ein Gleichspannungssignal umgeformt. Alle Signale $Q_1$ ... $Q_4$ werden mittels eines Operationsverstärkers summiert. Mit Hilfe von Analogdividierern werden normierte Signale erzeugt.

Es folgt ein Analogrechenwerk, das ebenfalls aus Operationsverstärkern aufgebaut ist und die Korrekturgrößen $K_F$, $K_{Tx}$, $K_{Ty}$ ermittelt. Diese werden in einer Endverstärkerstufe verstärkt.

Mit Hilfe dieser Signale lassen sich dann adaptive optische Elemente zur Regelung gemäß der Erfindung ansteuern.

**Ausführungsbeispiel:**

Das System soll eine Fokusvariation bis zu 2% und eine Verkippung von 1.5 mrad ausregeln können. Bei einer Fokussieroptik mit f = 125 mm sind dies $\pm$ 2 mm Fokusfehler und 0.22 mm Verkippung. Der Strahldurchmesser soll bis zu 50 mm betragen.

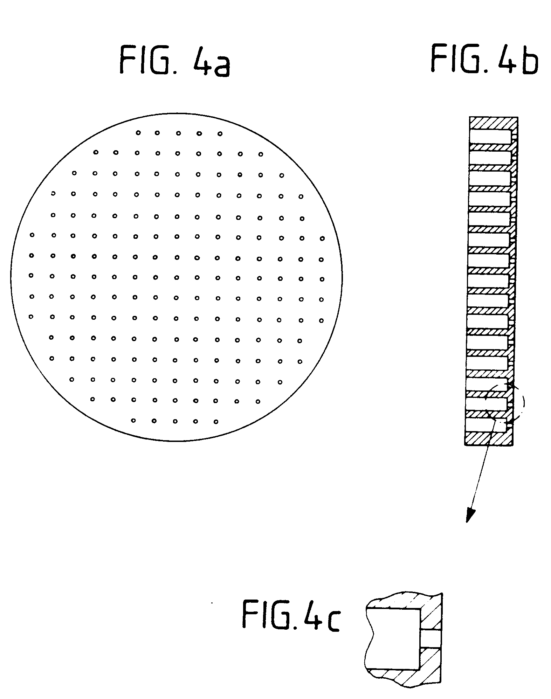

Der Strahlteiler ST soll unter einem Winkel von 5° eingesetzt werden. Im Prinzip müßte der Abstand der Bohrungen in der einen Richtung etwas größer sein. Der Fehler beträgt allerdings bei 5° weniger als 1%. Aus Figur 4 sind die Dimensionen zu erkennen. Dabei beträgt der Durchmesser des Strahlteilers 55 mm, der Abstand der Bohrungen voneinander 3 mm und der Durchmesser der zweistufigen Bohrungen an der Eintrittseite (Tiefe 9 mm) 1.5 mm und an der Austrittseite (Tiefe 1 mm) 0.5 mm. Die Dicke des Strahlteiler beträgt 10 mm. Die Positionierung der Bohrungen ist so gewählt, daß eine Bohrung im Zentrum liegt. Die Sammellinse L mit einer Brennweite von $f_F$ ist möglichst nahe hinter dem Strahlteiler ST angeordnet.

Der Abstand der 0. von der 1. Beugungsordnung im Brennpunkt beträgt

$$c = f * \lambda/b = 1.77 \text{ mm}.$$

Genau in den Fokus kommt die quadratische Lochblende B und zwar so, daß sie nur die 0. Ordnung durchläßt. Der Innendurchmesser beträgt 1,6 mm. Eine Verkippung von 1,5 mrad verursacht eine Verschiebung d der 0. Ordnung von

$$d = 1.5 \text{ mrad} * 500 \text{ mm} = 0.75 \text{ mm},$$

also so wenig, daß die 0. Ordnung ganz durchgelassen wird.

Dieser Lochblende B wird nun eine Optik mit zweifacher Vergrößerung nachgeschaltet. Die sphärische Linse V derselben hat eine Brennweite von $f_v = 100$ mm, die Zylinderlinse Z von $f_z = 1000$ mm. Die Linsen V und Z werden direkt hintereinander angeordnet, so daß zur Berechnung folgende Formel gilt:

$$1/f_m = 1/f_v + 1/f_z \Rightarrow f_m = 90.9 \text{ mm}$$
$$f_s = f_v = 100 \text{ mm}$$

wobei $f_m$ den meridionalen und $f_s$ den sagittalen Fokus darstellt. Der mittlere Fokus beträgt somit etwa 95 mm. Für eine Vergrößerung von 2 ergibt sich eine Gegenstandsweite g von 142.5 mm und eine mittlere Bildweite b von 285 mm. Die Linsenkombination V/Z wird im Abstand g von der Blende B aufgestellt; der Detektor Q im Abstand b von den Linsen V/Z.

Wenn das Bild des Brennpunktes, also die Gegenstandsweite, sich durch einen Fokusfehler verändert, ändert sich auch die Bildweite. Mit $b_m$ und $b_s$ werden die meridionale bzw. sagittale Bildweite bezeichnet.

Die folgende Tabelle gibt die Werte für verschiedene Gegenstandsweiten g an (alle Angaben in mm):

| $g$ = | 142.5 | 152.5 | 132.5 |
|---|---|---|---|
| $b_m$ = | 251.0 | 225.0 | 289.5 |
| $b_s$ = | 335.3 | 290.5 | 407.7 |

Bei einer Variation der Gegenstandsweite von etwas weniger als 10 mm bleibt also der Detektor zwischen dem meridionalen und dem sagittalen Bild. Dies ist notwendig, um immer ein korrektes Regelsignal zu erhalten.

Als Detektor wird ein pyroelektrischer Quadrantendetektor mit einer aktiven Fläche von $\pm$ 2 mm in jeder Richtung verwendet. Vor den Detektor kommt noch ein Chopper mit 200 Hz. Dieser dient - wie oben beschrieben - zur Zerhackung des Meßsignals.

**Patentansprüche**

1. Meßverfahren zur dreidimensionalen Lageregelung des Brennpunktes eines Hochenergie-Laserstrahls (S) unter Auskopplung eines Teilstrahles (Sm) und Messung von dessen Verkippung und Brennweitenabweichung, wobei
mittels eines verspiegelten, sich über den ganzen Querschnitt des Laserstrahls (S) gitterartig verteilte Bohrungen enthaltenden Strahlteilers (ST) intensitätsmäßig ein Teil des Laserstrahles (Sm) ausgekoppelt wird und mit einem eine astigmatische Aberration erzeugenden optischen System (V/Z) auf einen Quadrantendetektor (Q) fokussiert wird und
mittels einer Elektronik die auf dem Quadrantendetektor (Q) in Abhängigkeit von Defokussierung und Verkippung erzeugten unterschiedlichen Muster und Musterpositionen augewertet und elektrische Signale ($K_F$, $K_{Tx}$, $K_{Ty}$) erzeugt werden, die zur Korrektur der Verkippung und der Brennweitenabweichung dienen.

2. Verfahren nach Anspruch 1, **dadurch gekennzeichnet,** daß das durch die Gitterstruktur der Bohrungen des Strahlteiler (St) erzeugte Beugungsmuster auf eine zentrierte quadratische Lochblende (B) fokussiert wird, mit der die höheren Beugungsordnungen ausgeblendet werden und der durch die Lochblende (B) durchstretende Strahl mit dem eine astigmatische Aberration erzeugenden optischen System (V/Z) auf einen Quadrantendetektor (Q) fokussiert wird.

3. Vorrichtung zur dreidimensionalen Lageregelung des Brennpunktes eines Hochenergie-Laserstrahls (S) unter Auskopplung eines Teilstrahles (Sm) und Messung von dessen Verkippung und Brennweitenabweichung, wobei sie einen sich über den ganzen Querschnitt des Laserstrahls(S) erstreckenden Strahlteiler (ST) aufweist, der eine verspiegelte Platte mit gitterartig verteilten Bohrungen ist, womit intensitätsmäßig ein Teil (Sm) des Laserstrahls (S) ausgekoppelt wird und mit einem - eine astigmatische Abberation erzeugende - optischen System (V/Z) versehen ist, mit dem der ausgekoppelte Strahl (Sm) auf einen zugeordneten Quadrantendetektor (Q) fokussiert wird, wobei zur Erzeugung von elektrischen Meß- oder Regelsignalen ($K_F$, $K_{Tx}$, $K_{Ty}$) in Abhängigkeit von unterschiedlichen Mustern und Musterpositionen eine elektronische Einrichtung angeordnet ist.

4. Vorrichtung nach Anspruch 3, **dadurch gekennzeichnet,** daß eine zentrierte quadratische Lochblende zur Selektion der 0-ten Beugungsordnung von höheren Beugungsordnungen angeordnet ist.

5. Vorrichtung nach Anspruch 3 oder 4, **dadurch gekennzeichnet,** daß zur Erzeugung der astigmatischen Aberratrion eine Zylinderlinse (Z) mit etwa der zehnfachen Brennweite der zugeordneten sphärischen Linse (V) vorgesehen ist.

## Claims

1. Measuring process for three-dimensional stability control of the focal point of a high-energy laser-beam (S) whilst separating a beam portion (Sm) and measuring its tilt and aberration of focal length, in which respect

   a portion of the laserbeam (Sm) is relative to intensity separated by means of a mirrored beam splitter (ST) having bores spaced like a grid over the entire cross-section of the leaserbeam (S), and focussed on a quadrant detector (Q) by means of an optical system (V/Z) which produces an astigmatic aberration, and

   different patterns and pattern positions which are produced on the quadrant detector (Q) in dependence of defocussing and tilt are evaluated by electronic means, and electric signals ($K_F$, $K_{Tx}$, $K_{Ty}$) are produced which serve the correction of tilt and aberration of focal length.

2. Process according to claim 1, **characterised in that** the diffraction pattern produced by the grid structure of the bores of the beam splitter (St) is focussed on a centred quadratic diaphragm (B) by means of which the higher diffraction orders are collimated and the beam which passes through the diaphragm (B) is focussed on a quadrant detector (Q) by means of an optical system (V/Z) which produces an astigmatic aberration.

3. Device for three-dimensional stability control of the focal point of a high-energy laserbeam (S) whilst separating a beam portion (Sm) and measuring its tilt and aberration of focal length, in which respect it comprises a beam divider (ST), which extends over the entire cross-section of the laserbeam (S) and which is a mirrored plate with bores spaced like a grid, by means of which a portion (Sm) of the laserbeam is relative to intensity is separated and provided with an optical system (V/Z) which produces an astigmatic aberration, by means of which the separated beam (Sm) is focussed on an associated quadrant detector (Q), with an electronic device provided for producing electric measuring and control signals ($K_F$, $K_{Tx}$, $K_{Ty}$) in dependence of different patterns and pattern positions.

4. Device according to claim 3, **characterised in that** a centred quadratic diaphragm is arranged for selection of O-diffraction order from higher diffraction orders.

5. Device according to claim 3 or 4, **characterised in that** a cylinder lens (Z) with approximately tenfold focal length of the associated spherical lens (V) is provided for producing the astigmatic aberration.

**Revendications**

1. Procédé pour le réglage suivant trois axes de la position du foyer d'un faisceau laser (S) à haute énergie par séparation d'un faisceau partiel (Sm) et mesure de son pivotement et de l'écart de focale, procédé dans lequel

   à l'aide d'un diviseur de faisceau (ST) réfléchissant qui comporte des trous répartis en réseau et s'étend sur l'ensemble de la section du faisceau laser (S), on découple une partie de l'intensité (Sm) du faisceau laser et à l'aide d'un système optique (V/Z) produisant une aberration de type astigmatisme, on le focalise sur un détecteur (Q) à quadrants et

   à l'aide d'un dispositif électronique on exploite les modèles et la position des modèles produits sur le détecteur à quadrants (Q) en fonction de la défocalisation et du pivotement et on produit des signaux électriques ($K_F$, $K_{Tx}$, $K_{Ty}$) qui sont utilisés pour la correction et de l'écart de focale.

2. Procédé selon la revendication 1, caractérisé par le fait qu'on focalise sur un masque perforé (B) quadratique centré le modèle diffracté produit par les trous agencé en réseau du diviseur de faisceau (St), lequel masque élimine les ordres de diffraction supérieurs et par le fait que, à l'aide du système optique (V/Z) produisant une aberration de type astigmatisme, on focalise sur le détecteur à quadrants (Q) le faisceau qui traverse le masque perforé (B).

3. Dispositif pour le réglage suivant trois axes de la position du foyer d'un faisceau laser (S) à haute énergie par séparation d'un faisceau partiel (Sm) et mesure de son pivotement et de l'écart de focale,

   le dispositif comportant un diviseur de faisceau (ST) qui s'étend sur l'ensemble de la section du faisceau laser (S) et est constitué par une plaque réfléchissante avec des trous répartis en réseau au moyen de laquelle une partie (Sm) de l'intensité du faisceau laser (S) est découplée et étant pourvu d'un système optique (V/Z) produisant une aberration de type astigmatisme, à l'aide duquel le faisceau détaché (Sm) est focalisé sur un détecteur (Q) à quadrants associé, un dispositif électronique étant prévu pour produire des signaux électriques ($K_F$, $K_{Tx}$, $K_{Ty}$) de mesure ou de réglage en fonction des différents modèles et de leur position.

4. Dispositif selon la revendication 3, caractérisé par le fait qu'il est prévu un masque perforé quadratique centré pour sélectionner l'ordre de diffraction 0.

5. Dispositif selon la révendication 3 ou 4, caractérisé par le fait qu'il est prévu, pour produire l'aberration de type astigmatisme, une lentille cylindrique (Z) avec une focale environ dix plus élevée que celle de la lentille sphérique (V) associée.

# FIG.1

# FIG. 2

# FIG. 3

Quadrantendetektor

Sollstellung

Kippung

Fokus

Kippung
und Fokus

FIG. 4a

FIG. 4b

FIG. 4c

Filterverstärker

RMS / DC

Summe    $Q_1 + Q_2 + Q_3 + Q_4$

Normierung

Analogrechenwerk

Endverstärker

$K_{Ty}$          $K_F$          $K_{Tx}$

FIG. 5